# EUROPÄISCHE PATENTSCHRIFT

(11) **EP 3 094 912 B1**
(45) Veröffentlichungstag und Bekanntmachung des Hinweises auf die Patenterteilung: **27.12.2017**
(21) Anmeldenummer: 15715670.4
(22) Anmeldetag: 19.01.2015
(51) Int. Cl.: F16M 13/00, F16B 2/02, F16M 13/02

(54) **HALTERUNGSSYSTEM UND SET MIT EINEM DERARTIGEN HALTERUNGSSYSTEM**
MOUNTING SYSTEM AND SET COMPRISING A MOUNTING SYSTEM OF SAID TYPE
SYSTÈME DE FIXATION ET ENSEMBLE ÉQUIPÉ D'UN TEL SYSTÈME DE FIXATION

(30) Priorität: 17.01.2014 DE 102014000401; 21.11.2014 DE 102014017342
(43) Veröffentlichungstag der Anmeldung: 23.11.2016
(73) Patentinhaber: Tormaxx GmbH, 41199 Mönchengladbach (DE)
(72) Erfinder: KOCH, Hubert, 41199 Mönchengladbach (DE)
(74) Vertreter: Castell, Klaus
(86) Internationale Anmeldenummer: PCT/DE2015/000010
(87) Internationale Veröffentlichungsnummer: WO 2015/106754

(56) Entgegenhaltungen:
- EP-A2- 2 386 771
- WO-A1-2010/114370
- DE-U1-202013 100 988
- FR-A1- 2 590 630
- US-A- 1 516 489
- US-A- 2 489 535
- US-A- 5 276 949
- US-A1- 2008 296 454

## Beschreibung

Die Erfindung betrifft ein Halterungssystem und insbesondere ein Halterungssystem nach dem Oberbegriff des Patentanspruchs 1 sowie ein Set mit einem derartigen Halterungssystem. Das Halterungssystem ist besonders geeignet zum Befestigen eines elektrischen Geräts, insbesondere einer Kamera an einem Gegenstand oder an einer Oberfläche und diverse Sets mit solchen Halterungen sowie eine Verlängerungsvorrichtung zum Einsetzen in solche Halterungen ergänzen das System.

Halterungen, zum Beispeil US5276949, zum Befestigen von elektrischen Geräten, insbesondere von Kameras, beispielsweise Actionkameras, sind aus dem Stand der Technik zahlreich bekannt. Diese erlauben beispielsweise mit unterschiedlich langen verstellbaren Silikonbändern die Befestigung einer Plastikhalterung an einem Helm, einem Fahrradlenker, einem Außenspiegel oder einem Segelmast.

Aufgabe der vorliegenden Erfindung ist es, solche aus dem Stand der Technik bekannte Vorrichtungen zu verbessern.

Als Lösung werden in den Ansprüchen, der Beschreibung und den Zeichnungen unterschiedliche Halterungssysteme beschrieben.

Vorteilhafte Weiterbildungen sind Gegenstand der Unteransprüche.

Sämtliche Halterungen können eine Kugelpfanne aufweisen, wobei hier der Kamerahalter mit einem Kugelkopf eingreift. Der Kamerahalter wird dadurch fixiert, dass ein Fixierungselement, wie ein Spannhebel oder eine Drehvorrichtung, auf den Kugelkopf in der Kugelpfanne einwirkt. Vorteilhafterweise sind in der Kugelpfanne Schwenkaussparungen vorgesehen. Diese können beispielsweise im 90°-Winkel angeordnet sein.

Einzelne Elemente oder alle Elemente der unterschiedlichen Halterungen können aus Aluminium sein.

Mehrere Ausführungsbeispiele derartiger Halterungen sind in der Zeichnung gezeigt und werden im Folgenden näher beschrieben.

Es zeigt
- Figur 1: eine perspektivische Seitenansicht einer nicht erfindungsgemäßen Halterung Cero,
- Figur 2: eine schematische perspektivische Darstellung der in Figur 1 gezeigten Halterung mit auswechselbaren, einrastbaren Spannbacken,
- Figur 3: eine perspektivische Seitenansicht einer nicht erfindungsgemäßen Halterung Quattro
- Figur 4: eine schematische Darstellung der in Figur 3 gezeigten Elemente der Halterung ohne die Verbindungsstäbe,
- Figur 5: eine perspektivische Seitenansicht einer nicht erfindungsgemäßen Halterung Zwanziger,
- Figur 6: eine schematische Darstellung der in Figur 5 gezeigten Halterung,
- Figur 7: die Verwendung der in den Figuren 6 und 7 gezeigten Halterung,
- Figur 8: eine perspektivische Seitenansicht einer Halterung BigT,
- Figur 9: ein verstellbares Klemmelement mit unterschiedlichen einsetzbaren Spannbacken,
- Figur 10: den Einsatz von Silikonkautschukformteilen in ein Kettenglied,
- Figur 11: den Einsatz einer Spannbacke in ein Klemmelement,
- Figur 12: eine perspektivische Seitenansicht der in Figur 8 gezeigten Halterung,
- Figur 13: eine perspektivische Seitenansicht einer nicht erfindungsgemäßen Halterung Shark,
- Figur 14: eine perspektivische Seitenansicht einer nicht erfindungsgemäßen Halterung Proflex,
- Figur 15: eine perspektivische Seitenansicht einer nicht erfindungsgemäßen Halterung iSHOXS,
- Figur 16: eine perspektivische Seitenansicht einer nicht erfindungsgemäßen Halterung M1 im geöffneten Zustand,
- Figur 17: eine Draufsicht auf die in Figur 16 gezeigte Halterung im geschlossenen Zustand,
- Figur 18: die Verwendung der in Figur 16 gezeigten Halterung mit einem Kamerahalter und
- Figur 19: eine nicht erfindungsgemäße Halterung im Einsatz zum Halten einer Kamera mittels einer Verlängerung "Xtension".

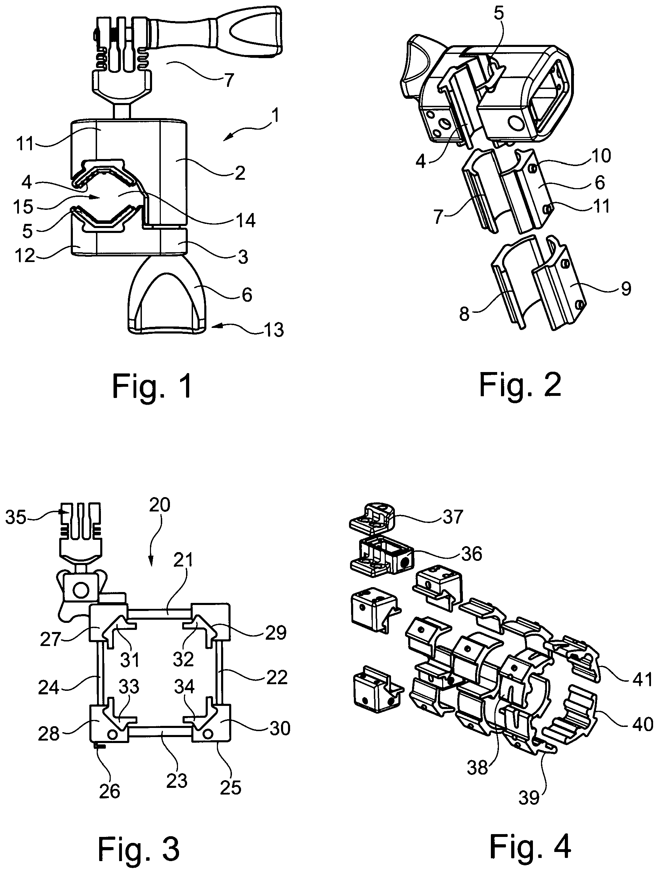

Die in den Figuren 1 bis 5 gezeigte Halterung 1 "Cero" kann vor allem zur Befestigung an Rundrohren verwendet werden und findet ihre Anwendung hauptsächlich im Bereich Actionsport/Fahrrad. An allen runden und ovalen Rohren bis zu einem Durchmesser von 40 mm kann diese Halterung montiert werden. Dabei ist besonders vorteilhaft, dass die offene Seite der Konstruktion sehr nah an anderen beweglichen Fahrradteilen (Räder, Speichen) montiert werden kann. Auswechselbare Spannbacken aus Kunststoff ermöglichen die Verwendung an unterschiedlichen Rohrdurchmessern. Die Halterung zeichnet sich also insbesondere durch Folgendes aus:

Das Klemmelement 2 und das Gegenstück 3 sind aus CNC-gefrästem Aluminium gefertigt. Die Halterung 1 besteht im Wesentlichen aus dem Klemmelement 2 und dem Gegenstück 3, in die verschiedene Kunststoffeinsätze 4, 5, optimiert für unterschiedene Profile, eingesetzt werden können.

Die Kunststoffeinsätze 4, 5 umfassen das Objekt, an dem der Halter montiert wird, und werden durch eine Drehschraube 6 einer Spanneinrichtung 13 fixiert. Die Halterung 1 ist für Gegenstände mit einem Durchmesser von 10 - 40 mm geeignet und sie hat einen Träger 7, an dem eine Kamera befestigt werden kann. Durch die geringe Abmessung der Halterung ist für alle gängigen Actionkamerasysteme die Montage in beengten Situationen möglich (z.B. zwischen Rad und Gabel eines Fahrrads). Dadurch sind besonders ausgefallene Perspektiven beim Filmen möglich. Die Halterung kann als Set serienmäßig inklusive Hartschalenkoffer mit umfangreichem Zubehör, wie insbesondere verschiedenen Kunststoffeinsätzen, ausgeliefert werden.

Die Figur 2 zeigt, wie verschiedene Kunststoffeinsätze 4 bis 9 rastend und formschlüssig in das Klemmelement 2 und das Gegenstück 3 eingesetzt werden können und dort mit zwei Noppen 10 und 11 gehalten werden. Diese Spannbacken 4, 5 sind aus einem Zweikomponentenmaterial gefertigt, um einerseits leicht in den Grundkörper rastend einsetzbar zu sein und andererseits mit einem vorzugsweise stabileren Teilbereich einen Gegenstand zu halten. Dabei wirkt der weichere Teil auch als Ausgleich, um eine optimale Anlage des härteren Teils der Spannbacke am Grundkörper zu ermöglichen.

Das Klemmelement 2 und das Gegenstück 3 haben somit jeweils einen formstabilen Grundkörper 11, 12, die über die Spanneinrichtung 13 aufeinander zu bewegt werden können und zwischen denen ein Freiraum 14 ist, der durch zwei Kunststoffeinsätze 4, 5, die als Spannbacken dienen begrenzt ist. Die Spanneinrichtung ist so ausgebildet, dass Klemmelement 2 und Gegenstück 3 auf einer geraden Linie 15, die durch die Mitte des Raumes 14 führt, aufeinander zu bewegt werden.

Die in den Figuren 3 und 4 gezeigte Halterung 20 "Quattro" besteht aus 4 Aluminiumteilen 21 bis 24, die mit Schauben 25, 26 (nur beispielhaft beziffert) verbunden werden. Die Montage an eckigen oder runden Befestigungspunkten ist damit äußerst effektiv möglich. Diese Halterung 20 ist für weitestgehend dauerhafte Montage gedacht. Mittels verschiedener Anbauteile ist auch hier eine Adaption einer Kamerabefestigung und anderer Systemkomponenten möglich. Die Halterung zeichnet sich also insbesondere durch Folgendes aus:

Die Klemmelemente und Gegenstücke 27 bis 30 sind aus CNC-gefrästem Aluminium gefertigt. Die Halterung besteht aus 4 Einzelelementen (A, B, C, D), die mittels verschieden langer Gewindeschrauben verbunden werden.

Innenliegend sind auswechselbare Einsätze aus Kunststoff als Spannbacken 31 bis 34, die auf verschiedene Profile (Vierkant, rund, oval) angepasst sind. Dazu gibt es auswechselbare Kameraeinsätze 35, 36, 37 für alle gängigen Actionkamerasysteme. Durch die "Rundumbefestigung" entsteht ein enormer Halt. Durch die variable Konstruktion ist die Montage an Profilen mit großem Durchmesser (10 - 100 mm) problemlos und sicher möglich. Durch die variable Verbindung mittels verschieden langer Gewindeschrauben 25, 26 können auch rechteckige oder schmal-ovale Profile problemlos verarbeitet werden. Ein Set ermöglicht die serienmäßige Lieferung inklusive Hartschalenkoffer sowie umfangreichem Zubehör, wie insbesondere unterschiedlichen Spannbacken 38 bis 41.

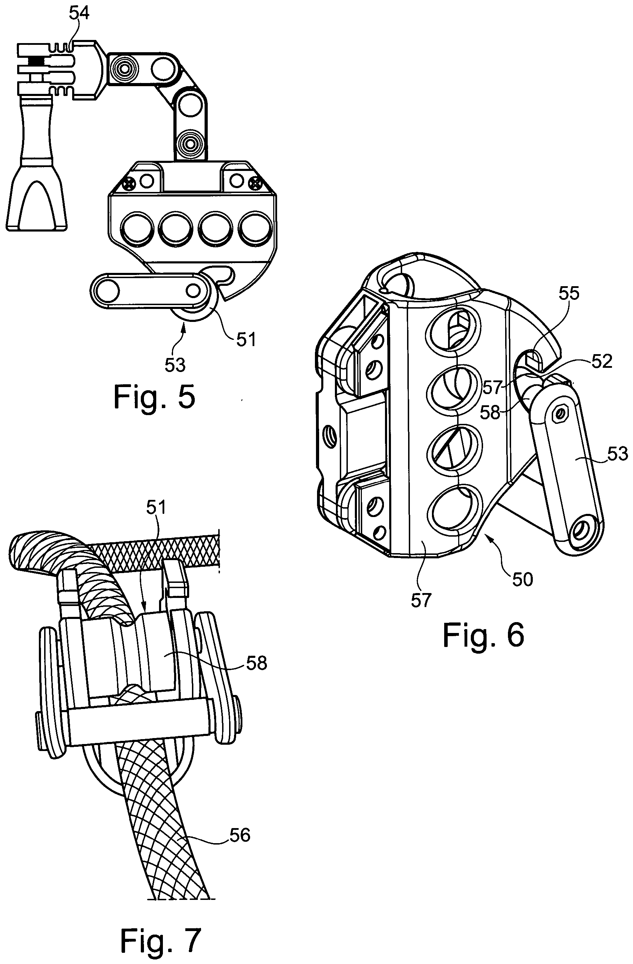

Die in den Figuren 5 bis 7 gezeigte Halterung 50 "Zwanziger" ist speziell für den Bereich Wintersport entwickelt worden und eignet sich ideal für die Montage an Skistöcken mit einem Durchmesser von 10 - 20 mm. Sie kann auch an Seilen und Tauen eingesetzt werden.

Es wird ein Exzenter 51 verwendet, der in einer entsprechenden Aufnahme 52 durch eine 180°-Bewegung verklemmt ist und ein Verspannen erzeugt. Die Halterung 50 zeichnet sich also insbesondere durch Folgendes aus:

Das vom Exzenter 51 gebildete Gegenstück 53, weist eine Rolle 58 aus elastischem Gummimaterial auf und wirkt mit dem u-förmigen Klemmelement 57 aus CNC-gefrästem Aluminium zusammen. Es ist insbesondere zur Montage an runden Profilen geeignet (10 - 20 mm). Es hat auswechselbare Kameraeinsätze 54 für alle gängigen Actionkamerasysteme. Durch die geringen Abmessungen und den enormen Halt aufgrund der Konstruktion ist die Anbringung an Skistöcken und Seilen möglich, ohne dass die Halterung 50 stört. Die Halterung wird an die Stange, Stock, Seil gesteckt. Das Klemmelement 53 wird eingesetzt, um ca. 180° geschwenkt und durch eine Hebelfunktion und die Führung der Achse 58 auf dem Bogen 57 nach unten gedrückt. Dabei drückt der Exzenter 51 gegen den Stock oder das Seil, auf dem der Exzenter 51 beim Schwenken des Klemmelementes 53 abrollt. Dadurch entsteht der Haltedruck. Eine hakenförmige Aufnahme 55 hält das Klemmelement 53 im verklemmten Zustand. Die Funktion ist in Figur 7 am Beispiel eines Seiles 56 gezeigt. Dadurch ist eine sehr schnelle und sichere Montage möglich. Für die Befestigung an unterschiedlichen Seil- oder Stangendurchmessern werden unterschiedliche Einsätze in das u-förmige Klemmelement 57 gesetzt. Die Lieferung erfolgt serienmäßig inklusive Hartschalenkoffer sowie umfangreichem Zubehör.

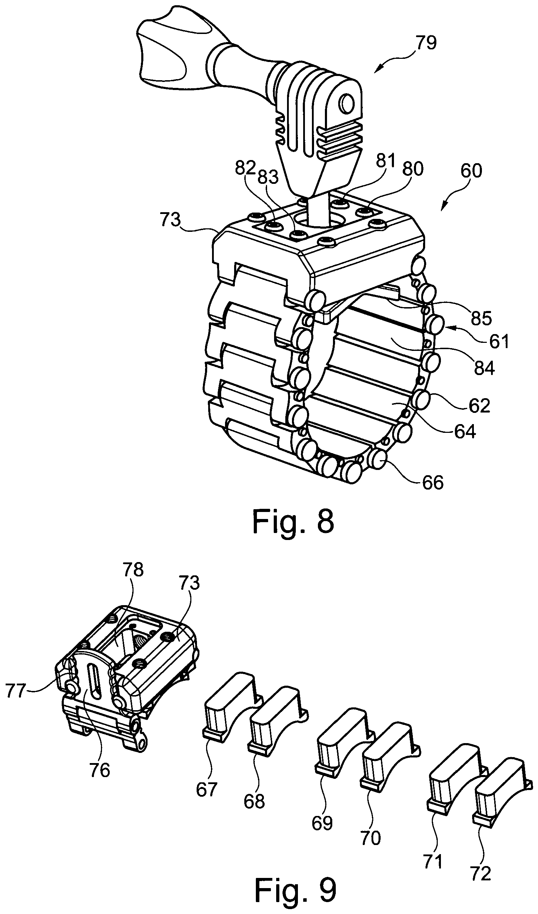

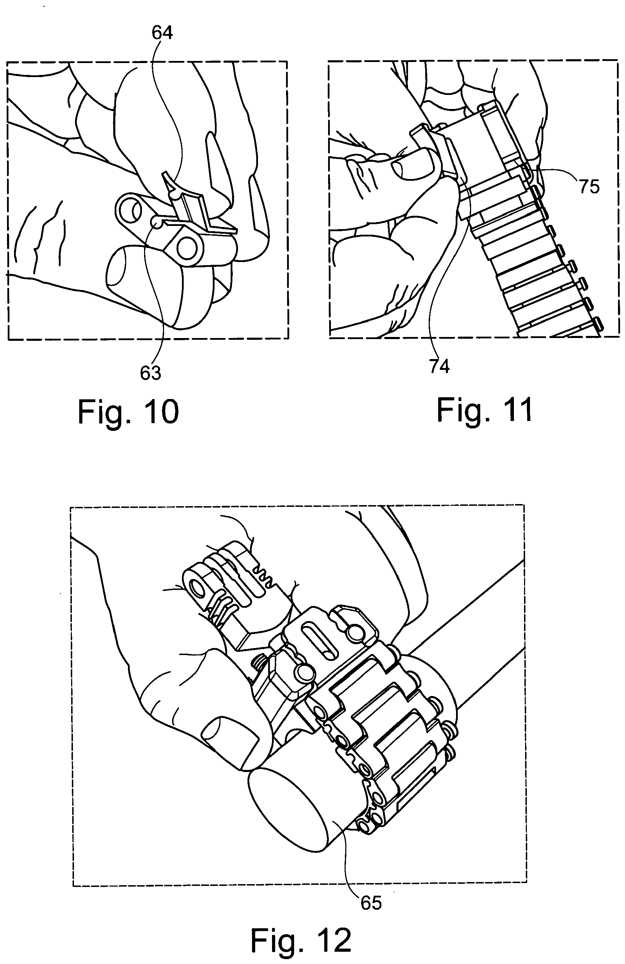

Bei der in den Figuren 8 bis 12 gezeigten Halterung 60 "Big T" wurden an den einzelnen Gliedern 61 eines Gliederbandes 62 Nuten 63 eingebracht, die mit einem Isolationsgummi 64 versehen wurden. Dadurch wird mehr Haftung und zusätzlicher Schutz der Oberflächen eines Gegenstandes 65 erreicht, an dem die Halterung 60 befestigt wird. Die einzelnen Glieder 61 werden durch Verschlussbolzen 66 verbunden.

Zu dem System gehören Druckstücke 67 bis 72, die als Spannbacken in das rückwärtige Gehäuse 73 in zwei Aussparungen 74 und 75 eingesetzt werden. So lässt sich die Halterung an verschiedene Durchmesser anpassen. Der Verschluss 76 wird in das Vorderteil 77 eingelegt und kann dort in verschiedenen Positionen gehalten werden. Die Druckstücke 67 bis 72 werden entweder eingerastet oder mit zwei Schrauben befestigt. Sie können aber auch lose eingelegt werden.

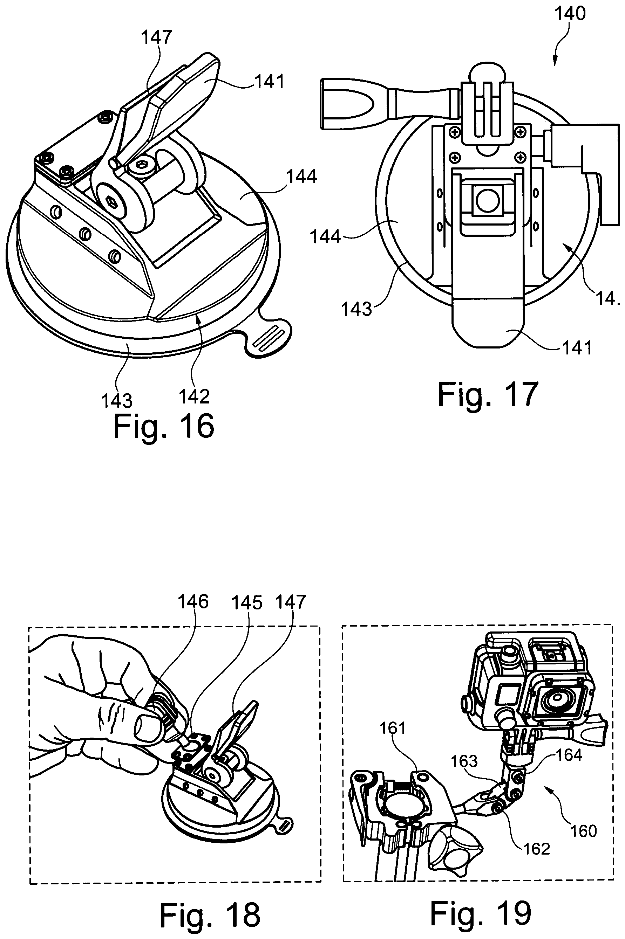

Die Halterung 60 bildet mit den Gliedern 61 und dem Gehäuse 73 mit den Druckstücken 67 bis 72 ein Klemmelement und ein Gegenstück, das von ein oder zwei Kettengliedern gebildet wird. Die Glieder und das Gehäuse sind aus CNC-gefrästem Aluminium hergestellt. Das Gehäuse 73 hat eine Kugelpfanne 78 zur Aufnahme eines Trägers 79 einer Kamera (vgl. Figur 19). Der Träger 79 hat eine Kugel (nicht sichtbar), die in der Kugelpfanne 78 liegt und dort befestigbar ist. Die Halterung 60 ist für Durchmesser von 10 - 70 mm geeignet und hat auswechselbare Träger 79 für Kameraeinsätze für alle gängigen Actionkamerasysteme. Durch die geringe Tiefe der Halterung und das Auskommen ohne Spannhebel o.ä. ist die Montage in beengten Situationen möglich (z.B. Sturzbügel oder Lenkrad Motorrad). Dadurch sind ausgefallene Perspektiven beim Filmen möglich. Die serienmäßige Lieferung erfolgt inklusive Hartschalenkoffer sowie umfangreichem Zubehör.

Dieses Halterungssystem hat somit ein Panzerkettenband 62 und mindestens eine Spanndruckschraube 80 bis 83, die die Druckstücke gegen einen Gegenstand 65 presst. Das Panzerkettenband weist Verbindungsbolzen und Kettenglieder auf und an der Innenseite der Kettenglieder sind Silikon-Kautschuk-Formteile angeordnet. Vorteilhaft ist es, wenn die Verbindungsbolzen 66 aus Messing hergestellt sind. Dabei wird vorzugsweise vorgesehen, dass die Verbindungsbolzen 66 einen wirksamen Durchmesser von etwa 3 mm aufweisen. Die Kettenglieder 61 sollten aus Aluminium hergestellt seien und das Panzerkettenband sollte eine innere Anlagefläche 84 aufweisen, an der die Silikon-Kautschuk-Formteile 64 derart angeordnet sind, dass die Kette einen Körper umschließen kann, ohne dass eine Berührung zwischen den Kettengliedern 61 oder den Bolzen 66 und dem Körper entsteht. Bevorzugt sind die Silikon-Kautschuk-Formteile 64 formschlüssig an den Kettengliedern 61 befestigt. Vorteilhaft ist es, wenn an der Innenseite der Spanndruckschraube ein Formkörper 67 bis 72 mit einer Auskerbung 85 angeordnet ist und besonderes bevorzugt ist es, wenn an der Innenseite der Spanndruckschraube 80 bis 83 zwei Formkörper 67, 68 angeordnet sind. Dabei sollte mindestens ein Formkörper durch die Spanndruckschraube relativ zum Gehäuse 73 verschiebbar sein. Um bei gleicher Bandlänge Gegenstände mit verschiedenen Durchmessern sicher zu halten, wird somit vorgeschlagen, dass die Spanndruckschraube an einem Spannkettenglied angeordnet ist, in das unterschiedliche Formkörper einsetzbar sind.

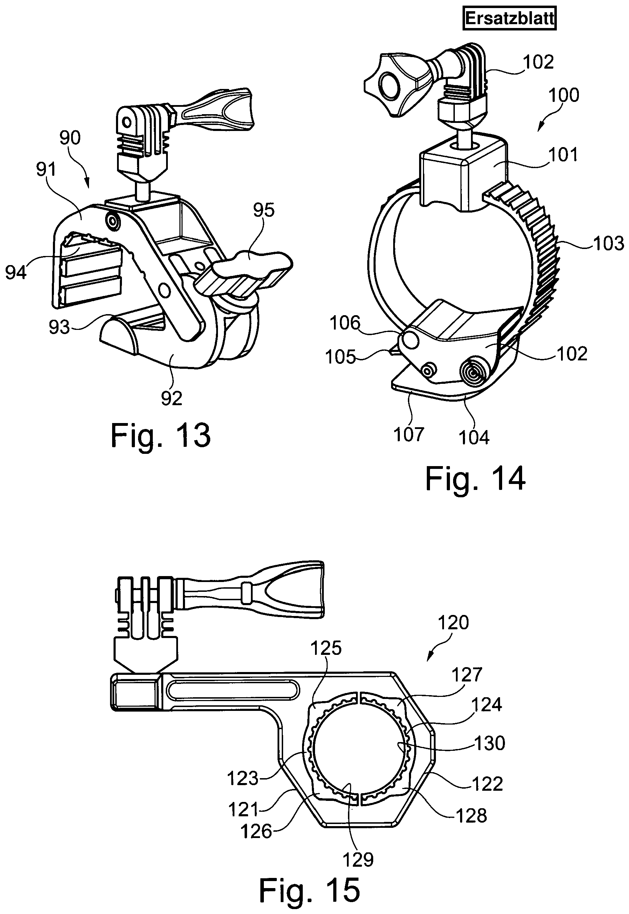

Die Figur 13 zeigt eine Halterung 90 "Shark", bei der das Klemmelement 91 mit dem Gegenstück 92 zusammenwirkt. Dabei liegt die Anlagefläche 93 auch beim Schwenken des Gegenstücks 92 immer gegenüber der Anlagefläche 94 des Klemmelementes. Die Anlagefläche 94 ist als Winkelfläche ausgebildet, um einen Gegenstand (nicht gezeigt) aufzunehmen, der von der gegenüberliegenden Anlagefläche 93 in die Winkelfläche gepresst wird. Dazu dient die Spannschraube, die auf das Gegenstück 92 wirkt und an dem Klemmelement 91 befestigt ist.

Eine Halterung 100 "Proflex" ist in Figur 14 gezeigt. Hier ist ein Träger 102 als Kamerahalter verschiebbar auf einem gezackten Band 103 aufgefädelt. Es können auch mehrere Träger auf dem Band aufgefädelt werden. Gegenüber dem als Klemmelement wirkenden Teil 101 liegt das Gegenstück 102, an dem das Band 103 befestigt ist und das einen Ratschenmechanismus 104 aufweist, um mit dem Hebel 107 das Ende 105 gegen den Anfang 106 des Bandes 103 zu verspannen.

Die in Figur 15 gezeigte Halterung 120 "iSHOXS" hat ein Klemmelement 121 und ein Gegenstück 122, die mittels Schrauben (nicht gezeigt) aneinander gezogen werden. Beide Elemente weisen Einsätze auf 123 und 124 auf, die formschlüssig im Klemmelement 121 bzw. im Gegenstück 122 gehalten werden. Dazu weisen die Einsätze Nasen 125 bis 128 auf, die aus einem weicheren Material hergestellt sind als das Klemmelement und das Gegenstück, die vorzugsweise aus Aluminium hergestellt sind. Die Anlagefläche 129 und 130 zu dem zu klemmenden Gegenstand (nicht gezeigt) ist vorzugsweise aus einem Material hergestellt, das wiederum härter ist als das Material der Nasen 125 bis 128.

Wenn mit der Halterung 120 ein nicht ganz runder Gegenstand oder ein nicht genau in die Biegung der Anlageflächen 129 und 130 passender Gegenstand gehalten werden soll, verschiebt sich beim Spannen der Halterung das weichere Material zwischen dem Material von Klemmelement 121 und Gegenstück 122 und den Anlageflächen 129 und 130. Das weichere Material behält durch die Nasen im Wesentlichen seine Position und kann gleichzeitig nachgeben, damit der Gegenstand mit den Anlageflächen optimal umfasst und gehalten wird.

Bei der in den Figuren 16 bis 18 gezeigten Halterung 140 handelt es sich um eine Saugnapfhalterung "M1". Ein wesentlicher Unterschied zu anderen Saugnapfhaltern ist eine zusätzliche flexible Löselasche 141. Die Halterung zeichnet sich also insbesondere durch einen Vakuum-Saughalter 142 mit Silikonmembran, die als Saugnapf 143 dient, und einen Grundkörper 144 aus CNC-gefrästem Aluminium aus. Sie haftet sicher auf allen glatten Oberflächen wie beispielsweise Scheiben, Motorhauben, Snowboards und Surfboards. Sie hat eine große Verstellbarkeit der Kameraaufnahme 145, wodurch sich beste Perspektivanpassungen ergeben. Sie hat auswechselbare Kameraeinsätze 146 für alle gängigen Actionkamerasysteme. Der Halter 140 wird auf die Oberfläche gedrückt und mittels eines Klemmhebels 147, der nach unten gedrückt wird, sicher arretiert. Die der Silikonmembran zugewandte Seite des Grundkörpers 144 kann mit kleinen "Zähnchen" (nicht gezeigt) verfräst sein, die in der Membran haften, um bei der Benutzung einen besonders sicheren Halt der Konstruktion zu gewährleisten, indem eine Verdrehung oder Verschiebung von Membran und Grundkörper durch die mit den Zähnchen erhöhte Reibung zu vermeiden.

Der in Figur 19 gezeigte "Xtension" ist eine Verlängerung 160 ist eine dreigliedrige Konstruktion, die in die Kugelpfanne eines Halters 161 eingebracht wird und nochmals durch seine an jedem Gelenk 162, 163 und 164 mögliche Einzelverstellung den kreativen und mechanischen Spielraum des Nutzers erhöht. Außerdem kann man den Xtension 160 noch an der Kugel in der Kugelpfanne am Halter 161 verstellen.

Die mit dem Gegenstand in Berührung kommenden Spannbacken können bei allen Halterungen aus verschiedenen Materialien hergestellt werden. Dabei weist vorzugsweise ein härteres Material zum Gegenstand und ein weicheres Material dient der Anlage an den Grundkörper. Es kann aber auch ein härteres Material für die vorzugsweise formschlüssige und/oder rastende Verbindung zum Grundkörper eingesetzt werden, während ein weicheres Material am Gegenstand anliegt. Vorzugsweise wird ein Zweikomponentenmaterial eingesetzt.

## Patentansprüche

1. Halterungssystem (1), zum Befestigen von elektrischen Geräten, insbesondere von Kameras, beispielsweise Actionkameras, mit einem Klemmelement und einem Gegenstück, die jeweils einen Grundkörper aufweisen und mittels einer Spanneinrichtung aufeinander zu bewegbar aneinander befestigt sind und zwischen denen ein Freiraum ist, in dem ein Gegenstand angeordnet werden kann, wobei das Halterungssystem (1) so ausgebildet ist, dass das Klemmelement und das Gegenstück bei einem Klemmvorgang auf einer geraden Linie, die durch die Mitte des Raumes führt, aufeinander zu bewegt werden ***dadurch gekennzeichnet, dass*** das Gegenstück von ein oder vorzugsweise zwei mittels Bolzen (66) gelenkig verbundenen Kettengliedern (61) eines Panzerkettenbandes (62) mit einem daran angeordneten Silikonkautschukformteil (64) gebildet ist, das Panzerkettenband (62) mit Bolzen (66) verbundene Kettenglieder (61) und eine innere Anlagefläche aufweist, an der Silikon-Kautschuk-Formteile (64) derart angeordnet sind, dass das Kettenband (62) einen Körper (65) umschließen kann, ohne dass eine Berührung zwischen den Kettengliedern (61) des Panzerkettenbandes (62) oder einem Bolzen (66) und dem Körper (65) entsteht.

2. Halterungssystem nach Anspruch 1, ***dadurch gekennzeichnet, dass*** das Klemmelement (2) einen Klemmelementgrundkörper (11, 12) aufweist, an dem eine Spannbacke angeordnet ist,

3. Halterungssystem nach Anspruch 2, ***dadurch gekennzeichnet, dass*** die Spannbacke ein Zweikomponentenmaterial aufweist.

4. Halterungssystem nach einem der Ansprüche 2 bis 3, ***dadurch gekennzeichnet, dass*** die Spannbacke Silikon oder Silikonkautschuk aufweist.

5. Halterungssystem nach einem der Ansprüche 2-4, ***dadurch gekennzeichnet, dass*** der Grundkörper (11, 12) aus Aluminium hergestellt ist.

6. Halterungssystem nach einem der vorhergehenden Ansprüche, ***dadurch gekennzeichnet, dass*** das das Panzerkettenband (62) einzelne austauschbare Kettenglieder (61) aufweist.

7. Halterungssystem nach einem der vorhergehenden Ansprüche, ***dadurch gekennzeichnet, dass*** die Spanneinrichtung eine Spannschraube (80 bis 83) aufweist.

8. Halterungssystem nach einem der vorhergehenden Ansprüche, ***dadurch gekennzeichnet, dass*** die Spanneinrichtung einen Exzenter (51) aufweist.

9. Halterungssystem nach Anspruch 8, ***dadurch gekennzeichnet, dass*** der Exzenter (51) ein elastisches Gummi-Material aufweist.

10. Halterungssystem nach einem der vorhergehenden Ansprüche, ***dadurch gekennzeichnet, dass*** es eine Verlängerung (160) zum Einsetzen in das Klemmelement (2) aufweist, wobei die Verlängerung (160) eine Kugel aufweist, die in einer Kugelpfanne einer Halterung angebracht ist und die Verlängerungsvorrichtung Glieder aufweist, die über Gelenke (162 bis 164) miteinander verbunden sind, wobei die Gelenke jeweils in einer gewünschten Position fixierbar sind.

11. Halterungssystem nach Anspruch 10, ***dadurch gekennzeichnet, dass*** die Glieder (162 bis 164) der Verlängerung (160) in allen drei Raumrichtungen verstellbar sind.

12. Halterungssystem nach Anspruch 10 oder 11, ***dadurch gekennzeichnet, dass*** die Verlängerung (160) genau drei Glieder (162 bis 164) aufweist.

## Claims

1. A holding system (1), for fastening electrical devices, particularly cameras, for example action cameras, having a clamping element and a counterpart piece which in each case have a base body and are fastened to one another such that they can be moved towards one another and between which there is a free space, in which an object can be arranged, the holding system (1) being constructed in such a manner that the clamping element and the counterpart piece are moved towards one another during a clamping process on a straight line which leads through the centre of the space, ***characterized in that*** the counterpart piece is formed by one or preferably two chain links (61), which are connected in an articulated manner by means of bolts (66), of an armoured chain strap (62) with a moulded silicone rubber part (64) arranged thereon, the armoured chain strap (62) has chain links (61) connected with bolts (66) and an inner bearing surface, on which moulded silicone rubber parts (64) are arranged in such a manner that the chain strap (62) can encompass a body (65), without contact occurring between the chain links (61) of the armoured chain strap (62) or a bolt (66) and the body (65).

2. The holding system according to Claim 1, ***characterized in that*** the clamping element (2) has a clamping element base body (11, 12), on which a clamping jaw is arranged.

3. The holding system according to Claim 2, ***characterized in that*** the clamping jaw has a two-component material.

4. The holding system according to one of Claims 2 to 3, ***characterized in that*** the clamping jaw has silicone or silicone rubber.

5. The holding system according to one of Claims 2-4, ***characterized in that*** the base body (11, 12) is produced from aluminium.

6. The holding system according to one of the preceding claims, ***characterized in that*** the armoured chain strap (62) has individual replaceable chain links (61).

7. The holding system according to one of the preceding claims, ***characterized in that*** the clamping device has a clamping screw (80 to 83).

8. The holding system according to one of the preceding claims, ***characterized in that*** the clamping device has an eccentric (51).

9. The holding system according to Claim 8, ***characterized in that*** the eccentric (51) has an elastic rubber material.

10. The holding system according to one of the preceding claims, ***characterized in that*** the holding system has an extension (160) for insertion into the clamping element (2), wherein the extension (160) has a ball, which is fixed in a ball socket of a holder and the extension device has elements which are connected to one another by means of joints (162 to 164), wherein the joints can be fixed in a desired position in each case.

11. The holding system according to Claim 10, ***characterized in that*** the elements (162 to 164) of the extension (160) can be adjusted in all three spatial directions.

12. The holding system according to Claim 10 or 11, ***characterized in that*** the extension (160) has exactly three elements (162 to 164).

## Revendications

1. Système de fixation (1), destiné à fixer des appareils électriques, notamment des caméras, par exemple des caméras d'action, avec un élément de serrage et une pièce antagoniste qui comportent chacun un corps de base et qui sont fixés l'un à l'autre en étant mobiles l'un vers l'autre au moyen d'un dispositif de tension et entre lesquels se trouve un espace libre dans lequel peut être placé un objet, le système de fixation (1) étant conçu de telle sorte que lors d'un processus de serrage, l'élément de serrage et la pièce antagoniste soient déplacés l'un vers l'autre sur une ligne droite qui conduit à travers le centre de l'espace, ***caractérisé en ce que*** la pièce antagoniste est formée par un ou de préférence par deux maillons de chaîne (61) reliés de manière articulée au moyen de boulons (66) d'une bande de chaîne gourmette (62) avec une pièce moulée (64) en caoutchouc de silicone placée sur celle-ci, la bande de chaîne gourmette (62) comporte des maillons de chaîne (61) reliés avec des boulons (66) et une surface d'appui intérieure, sur laquelle des pièces moulées (64) en caoutchouc de silicone sont placées de telle sorte que la bande de chaîne (62) soit apte à entourer un corps (65) sans donner naissance à un contact entre les maillons de chaîne (61) de la bande de chaîne gourmette (62) ou un boulon (66) et le corps (65).

2. Système de fixation selon la revendication 1, ***caractérisé en ce que*** l'élément de serrage (2) comporte un corps de base (11, 12) d'élément de serrage sur lequel est placée une mâchoire de serrage.

3. Système de fixation selon la revendication 2, ***caractérisé en ce que*** la mâchoire de serrage comporte une matière bicomposants.

4. Système de fixation selon l'une quelconque des revendications 2 à 3, ***caractérisé en ce que*** la mâchoire de serrage comporte de la silicone ou du caoutchouc de silicone.

5. Système de fixation selon l'une quelconque des revendications 2 à 4, ***caractérisé en ce que*** le corps de base (11, 12) est fabriqué en aluminium.

6. Système de fixation selon l'une quelconque des revendications précédentes, ***caractérisé en ce que*** la bande de chaîne gourmette (62) comporte des maillons de chaîne (61) individuels, interchangeables.

7. Système de fixation selon l'une quelconque des revendications précédentes, ***caractérisé en ce que*** le système de tension comporte une vis de tension (80 à 83).

8. Système de fixation selon l'une quelconque des revendications précédentes, ***caractérisé en ce que*** le système de tension comporte une excentrique (51).

9. Système de fixation selon la revendication 8, ***caractérisé en ce que*** l'excentrique (51) comporte une matière caoutchouteuse élastique.

10. Système de fixation selon l'une quelconque des revendications précédentes, ***caractérisé en ce qu***'il comporte une rallonge (160) destinée à être insérée dans l'élément de serrage (2), la rallonge (160) comportant une bille qui est montée dans un coussinet sphérique d'une fixation et le dispositif de rallonge comportant des maillons qui sont reliés les uns aux autres par l'intermédiaire d'articulations (162 à 164), les articulations étant susceptibles d'être fixées chacune dans une position souhaitée.

11. Système de fixation selon la revendication 10, ***caractérisé en ce que*** les maillons (162 à 164) de la rallonge (160) sont réglables dans toutes les trois directions dans l'espace.

12. Système de fixation selon la revendication 10 ou 11, ***caractérisé en ce que*** la rallonge (160) comporte exactement trois organes (162 à 164).
